# FASCICULE DE BREVET EUROPEEN

(11) **EP 0 923 053 B1**
(45) Date de publication et mention de la délivrance du brevet: **02.05.2003**
(21) Numéro de dépôt: 98403056.9
(22) Date de dépôt: 04.12.1998
(51) Int. Cl.: G07C 1/30, G07B 15/02, G07F 7/08

(54) **Dispositif antivol pour un ticket électronique de stationnement payant**
Diebstahlsicherungsvorrichtung für eine elektronische Parkgebührkarte
Anti-theft device for an electronic parking fee ticket

(30) Priorité: 10.12.1997 FR 9715651
(43) Date de publication de la demande: 16.06.1999
(73) Titulaire: SCHLUMBERGER Systèmes, 92120 Montrouge (FR)
(72) Inventeur: Perreard, David, 25320 Montferrand le Chateau (FR)
(74) Mandataire: Lemoyne, Didier

(56) Documents cités:
- EP-A- 0 034 570
- EP-A- 0 323 859
- EP-A- 0 495 741
- FR-A- 2 581 222
- FR-A- 2 738 071
- US-A- 4 924 075

## Description

La présente invention concerne un dispositif antivol pour un ticket électronique de stationnement payant.

L'invention trouve une application particulièrement avantageuse dans le domaine général du stationnement payant, et plus spécialement dans celui des parcmètres individuels placés à l'intérieur des véhicules, connus sous le nom d'ICPM, acronyme du terme anglo-saxon "In-Car Parking-Meter".

On connaît de la demande française No. 97/15650 un ticket électronique de stationnement payant, constitué d'un boîtier individuel portable autonome comprenant :
- une première mémoire de stockage de régimes tarifaires,
- une deuxième mémoire de stockage d'unités de stationnement,
- des moyens de sélection d'un régime tarifaire stocké dans ladite première mémoire,
- une horloge fournissant la date et l'heure courantes,
- des moyens de calcul de la date et de l'heure de fin de stationnement autorisé compte tenu du régime tarifaire sélectionné, des unités de stationnement stockées dans ladite deuxième mémoire, et de la date et de l'heure courantes,
- un afficheur apte à afficher, au moins, le régime tarifaire sélectionné et la date et l'heure de fin de stationnement autorisé.

Cependant, on comprend que, la date et l'heure de fin de stationnement autorisé étant une indication du nombre d'unités de stationnement présentes dans la deuxième mémoire, l'affichage de ces informations de fin de stationnement, pourtant indispensable au contrôle, peut constituer une incitation au vol du boîtier. En effet, une personne mal intentionnée, constatant sur l'afficheur d'un ticket électronique une fin de stationnement très tardive, en déduira que le boîtier contient un grand nombre d'unités de stationnement et sera donc tentée de fracturer le véhicule pour dérober le ticket électronique qui s'y trouve.

Aussi, le problème technique à résoudre par l'objet de la présente invention est de proposer un dispositif antivol pour un ticket électronique de stationnement payant du type de celui précédemment décrit en référence à la demande de brevet français No. 97/15650, dispositif qui permettrait de dissuader d'éventuels voleurs de subtiliser les tickets électroniques des véhicules en stationnement.

La solution au problème technique posé consiste, selon la présente invention, en ce que ledit afficheur n'affiche la date et l'heure de fin de stationnement autorisé que pendant une première durée déterminée après le début de stationnement et pendant une deuxième durée déterminée avant la fin de stationnement autorisé.

Ainsi, dans ladite première durée déterminée, généralement courte, la date et l'heure de fin de stationnement autorisé sont affichés afin que l'automobiliste puisse vérifier le bon fonctionnement du ticket électronique et prendre connaissance des informations de date et heure de fin de stationnement autorisé. Puis, la date et l'heure de fin de stationnement autorisé disparaît de l'afficheur, empêchant toute personne malveillante de connaître le nombre d'unités restantes dans le ticket électronique, ce qui ne l'incite pas à le voler. Pendant toute cette deuxième période, le contrôle de licéité de stationnement est possible par défaut, l'absence d'affichage de la fin de stationnement autorisé indiquant à l'agent de surveillance que le véhicule se trouve encore dans une période de stationnement licite. Enfin, un peu avant la fin de stationnement autorisé débute ladite deuxième période déterminée au cours de laquelle la date et l'heure de fin de stationnement autorisé réapparaissent sur l'afficheur pour, cette fois, un contrôle visuel direct par l'agent de surveillance jusqu'à la fin de stationnement autorisé.

La description qui va suivre, en regard des dessins annexés, donnés à titre d'exemples non limitatifs, fera bien comprendre en quoi consiste l'invention et comment elle peut être réalisée.

La figure 1 est une représentation schématique d'un système de stationnement payant à ticket électronique.

La figure 2 est un chronogramme d'un dispositif antivol pour le ticket électronique de la figure 1.

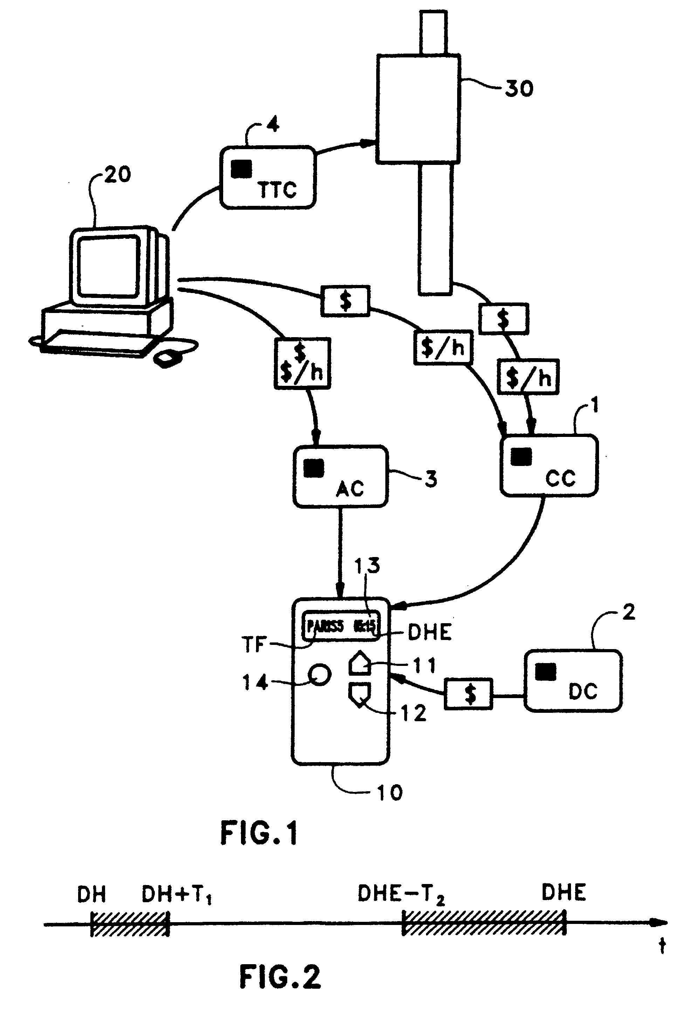

Sur la figure 1 est représenté schématiquement un système de stationnement payant organisé autour d'un ticket électronique 10 dont le fonctionnement est décrit dans la demande de brevet français No 97/15650 précitée. A ce stade, il suffit de savoir que ledit ticket électronique est constitué par un boîtier 10 contenant une première mémoire de stockage de régimes tarifaires, une deuxième mémoire de stockage d'unités de stationnement , une horloge donnant la date et l'heure courantes DH et des moyens de calcul, à savoir essentiellement un microprocesseur, aptes à établir la date et l'heure DHE de fin de stationnement autorisé en fonction du régime tarifaire sélectionné à l'aide de boutons 11, 12, des unités de stationnement stockées dans ladite deuxième mémoire et de la date et l'heure DH courantes. La date et l'heure DHE de fin de stationnement autorisé, ainsi que le régime tarifaire TF choisi sont visualisés sur un afficheur 13 de manière à permettre le contrôle de licéité du stationnement par un agent de surveillance. Au cours du stationnement, le microprocesseur du boîtier 10 consomme progressivement les unités de la deuxième mémoire de stockage, cette consommation pouvant être arrêtée par l'usager, en appuyant sur la touche 14, s'il revient à son véhicule avant la fin du stationnement autorisé.

Dans le but d'éviter d'afficher en permanence la date et l'heure DHE de fin de stationnement autorisé, représentatives du nombre d'unités stockées dans la deuxième mémoire du boîtier, il y a avantage à ce que l'affichage de la fin de stationnement autorisé ne se fasse que pendant des périodes de temps limitées.

La figure 2 montre que cet affichage se produit :
- à la mise en route du ticket électronique, entre les instants DH et DH + T1, la durée T1 étant de l'ordre de 1 à 2mn, temps nécessaire à l'automobiliste de vérifier le bon fonctionnement du boîtier 10,
- à la fin du stationnement autorisé, entre les instants DHE - T2 et DHE, la durée T2 étant de l'ordre de 30mn à une heure, ceci afin de pouvoir contrôler la licéité du stationnement du véhicule afin d'avoir atteint la fin de stationnement autorisé.

Dans l'intervalle, tout voleur éventuel ne peut avoir accès à la date et l'heure DHE de fin de stationnement autorisé et ne connaît donc pas le nombre d'unités de stationnement restantes. Quand l'affichage réapparaît, cette même personne ne peut que constater que les unités restantes correspondent à la période T2, trop restreinte pour susciter un quelconque intérêt pouvant justifier l'effraction du véhicule.

Bien entendu, les première T1 et deuxième T2 durées peuvent être paramètrées au niveau du boîtier 10 du ticket électronique.

## Revendications

1. Dispositif antivol pour un ticket électronique de stationnement payant, constitué d'un boîtier (10) individuel portable comprenant :
- une première mémoire de stockage de régimes tarifaires,
- une deuxième mémoire de stockage d'unités de stationnement,
- des moyens (11, 12) de sélection d'un régime tarifaire stocké dans ladite première mémoire,
- une horloge fournissant la date et l'heure courantes (DH),
- des moyens de calcul de la date et de l'heure (DHE) de fin de stationnement autorisé compte tenu du régime tarifaire (TF) sélectionné, des unités de stationnement stockées dans ladite deuxième mémoire, et de la date et de l'heure courantes (DH),
un afficheur (3) affichant le régime tarifaire (TF) sélectionné, ledit afficheur n'affichant la date et l'heure de fin de stationnement autorisé que pendant une première durée (T1) déterminée après le début du stationnement et pendant une deuxième durée (T2) déterminée avant la fin du stationnement autorisé.

2. Dispositif selon la revendication 1, **caractérisé en ce que** lesdites première (T1) et deuxième (T2) durées déterminées sont paramètrables.

## Claims

1. Antitheft device for electronic pay parking tickets, made up of an individual portable housing (10) including the following:
- a tariff regime storage memory
- a parking unit storage memory
- means (11, 12) to select a tariff regime stored in the first memory,
- a clock that supplies the current date and time (DH),
- means to calculate the date and time when authorised parking ends (DHE) on the basis of the selected tariff regime (TF), the parking units stored in the second memory and the current date and time (DH),
- a display (3) that shows the selected tariff regime (TF), which only displays the date and time when authorised parking ends for a set duration (T1) after the start of parking and for a second set duration (T2) before the end of the authorised parking time.

2. Device in accordance with claim 1, **characterised by** the fact that the said first (T1) and second (T2) set durations are configurable.

## Patentansprüche

1. Diebstahlschutz für einen elektronischen gebührenpflichtigen Parkschein bestehend aus einem einzelnen tragbaren Gehäuse (10) mit:
- einem ersten Speicher zur Sicherung der Tarifsysteme,
- einem zweiten Speicher zur Sicherung der Parkeinheiten,
- Mechanismen (11, 12) zur Wahl eines im o.g. ersten Speicher gesicherten Tarifsystems,
- einer Uhr zur Anzeige von laufender Uhrzeit und Datum (DH),
- Mechanismen zur Berechnung von Enddatum und -uhrzeit (DHE) der zulässigen Parkzeit unter Berücksichtigung des angewählten Tarifsystems (TF), der im o.g. zweiten Speicher gesicherten Parkeinheiten und von laufender Uhrzeit und Datum (DH),
- einem Display (3) zur Anzeige des angewählten Tarifsystems (TF), wobei das genannte Display Enddatum und -uhrzeit der zulässigen Parkzeit nur während einer ersten festgelegten Dauer (T1) nach Beginn der Parkzeit und während einer zweiten festgelegten Dauer (T2) vor Ende der zulässigen Parkzeit anzeigt.

2. Vorrichtung laut Patentanspruch 1, **dadurch gekennzeichnet, dass** die genannte erste (T1) und zweite (T2) festgelegte Dauer parametrierbar sind.
